# EUROPEAN PATENT APPLICATION

(11) **EP 0 959 635 A1**
(43) Date of publication of application: **24.11.1999**
(21) Application number: 99401073.4
(22) Date of filing: 03.05.1999
(51) Int. Cl.: H04Q 7/32

(54) **Connectionless downloading of software to wireless terminals**

(30) Priority: 20.05.1998 ES 9801043
(71) Applicant: ALCATEL, 75008 Paris (FR)
(72) Inventor: Martinez Acedo, Jose Luis, 28260 Galapagar (Madrid) (ES)
(74) Representative: Feray, Valérie

(57) **Abstract**

Method of connectionless downloading of a software program in a number of terminations of a communications network, by broadcasting, over a downloading channel from a fixed infrastructure (Fl), the program in question in fragmented form, to a set of network terminations (WT) grouped according to their software version. The transmission takes place in repeated sequences. Each network termination (WT) receives the repeated sequences of the software program fragments, stores those program fragments received error-free, and continues receiving repeated sequences until all the fragments of a complete version have been stored error-free, in which moment the network termination (WT) sends an confirmation announcement of reception completed. When the percentage of network terminations (WT) which have sent reception completed confirmation announcements is equal to or surpasses a successful threshold value (U), the downloading process is stopped.

## Description

The present invention relates to a method of downloading of a software program in a number of terminations of a communications network, permitting said program to be loaded into one or several of said network terminations, particularly wireless network terminations, from an operation and maintenance centre, by making use of the air interface as the point - to-multipoint transmission medium.

### BACKGROUND OF THE INVENTION

At present, the majority of wireless network terminations work on a basis of software programs custom-designed for the appropriate operation of said terminations. These programs, however, frequently require modifications either in order to include new services that satisfy new user requirements, or else to update the existing services incorporating more recent and improved versions of the aforementioned program.

The relatively rapid development of new versions of software programs throughout the field of communications technology, makes the work of carrying out updates or modifications in said programs become an increasingly frequent practice, requiring speed in implementation and reduction in the costs involved therein.

At the present time, this task is normally carried out by an operative who travels to each of the network terminations to perform the downloading operation of the new software by means of physical and individual contacts in each of them. This operation proves costly, inefficient and also slow.

A method and a device are presently known for automatic downloading and without the intervention of operatives, of an updated software program to portable wireless communications units from the US patent number 5,689,825. According to the method proposed in this document, a software program is updated in a portable communications unit, like for example any kind of portable radiotelephone or radio, by means of a software downloader incorporated in the battery charger unit of said device. In this way, advantage is taken of the time dedicated to battery charging in order to carry out the downloading of updated software into the memory of the portable communications unit.

According to said method, a server receives, via a wireless network, the updated software and stores it for later transmission to the portable unit for which it is intended. To achieve this, said server provides the data of the updated software to a public land-based communications network which, in turn, communicates by cable connection, with the software downloader mentioned.

The software loader, after receiving a series of priority messages, starts to receive the updated software in the form of blocks from said public land-based communications network, stores said blocks, verifies if all the blocks have been received, and once reception has been concluded, forwards the blocks to the portable destination unit, thereby completing the downloading process.

This method, however, is applicable under conditions where use can be made of a public land-based communications network. In addition, the downloading of the software from the server to the portable destination unit is done necessarily over cable.

Moreover, the method proposed in the patent US-A-5,689,825 requires the use of a software downloading unit specially designed for this purpose.

in addition, access to the server, according to the method mentioned, is achieved by means of making calls to said server, implying additional operating expenses.

To overcome these drawbacks, the method of connectionless downloading of a software program in a number of terminations, object of the present invention, has been proposed. This method offers the advantages of permitting the implementation of the software downloading in a wireless mode, and with no requirement for the use of individual downloading units in each device, or for additional access calls.

Another important advantage of the method of the invention is that since it concerns a connectionless communication, a significant transmission rate is permissible, around ten times faster than with a connection-oriented communication.

### DESCRIPTION OF THE INVENTION

According to the method of the invention, the software downloading is done in a simultaneous manner, from one fixed termination to a set of terminations (point - to - multipoint), optimising the use of the air interface resources (radio channels) and thereby making possible an improved grade of service.

The wireless terminations which have the same version of software or hardware, are grouped together into a set to which a group identifier is allocated. Said group identifier is that which is employed by the fixed termination to set up communication with said groups.

The fixed termination indicates a broadcast channel over which the data relative to the updated software are subsequently sent. Said data are sent in fragments and sequentially.

The destination network terminations receive and process only the fragments that are error-free. After all downloaded data have been received free from errors, each destination termination executes an OA&M (Operation, Administration & Maintenance) call to the fixed termination to inform that the transmission process has been successful. If a destination termination does not receive all the fragments error-free, it continues receiving repeated sequences of the fragments until error-free reception is completed.

The fixed termination records the number of terminations that have sent reception completed signals and keeps on the continuous and sequential transmission of the fragments until all or a pre-established number of the destination network terminations have indicated complete data reception.

### BRIEF DESCRIPTION OF THE FIGURES

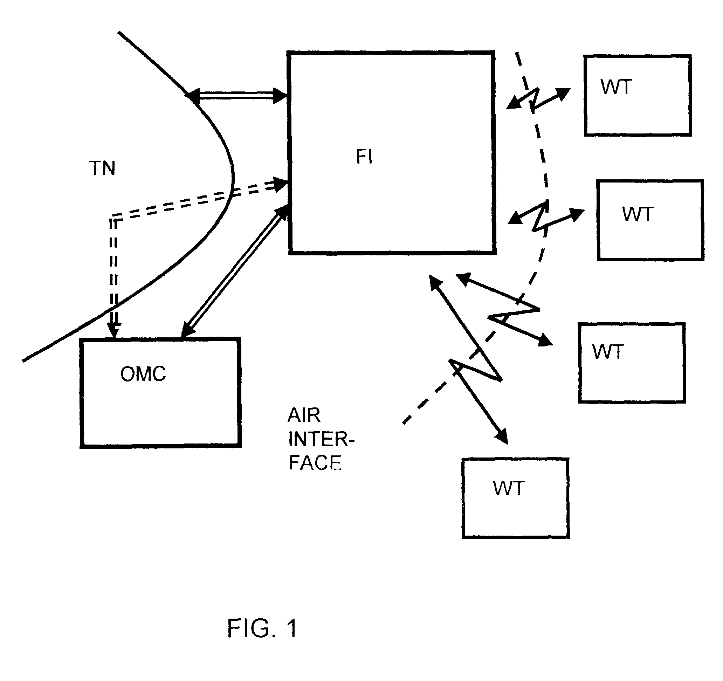

Figure 1 shows a block diagram representing an architecture which holds the main elements intervening in the method of the invention.

Figure 2 is a flow chart showing the steps taken by a fixed infrastructure of the wireless access system in order to carry out the downloading procedure.

Figure 3 is a flow chart showing the steps taken in each destination termination during the downloading process.

### PREFERRED IMPLEMENTATION OF THE INVENTION

In the method of the invention use is made preferably, but not in a limiting manner, of the wireless elements which are detailed below;
- Operation and maintenance centre (OMC), which is connected to the fixed infrastructure (Fl) of the wireless access system -which shall be described below-, and contains all the management procedures of software versions, offering likewise the man-machine interface for an OA&M operator. The connection with the fixed infrastructure (Fl) of the wireless access system can be made directly or through a conventional telecommunications network (TN).
   The operation and maintenance centre (OMC) mentioned is made up of a computer or workstation equipped with a serial interface for its connection to the fixed infrastructure. Inside it, stored in non-volatile memory, is the program to be loaded into the destination network terminations. Likewise, it includes a specific program for the software downloading application, under the control of which the initiation and conclusion of the software downloading procedure take place.
- Fixed infrastructure (Fl) of the wireless access system, which has the main job of serving as connection point between a local exchange and the network terminations (WT), that is, destination terminations for software downloading to which are connected the terminals of the telecommunications services user. Said infrastructure (Fl) is connected to the terminations (WT) via the air interface to the local exchange through the interfaces required by the local exchange and to the operation and maintenance centre (OMC).
   The components that make up the fixed infrastructure (Fl) of the wireless access system are: a processor which serves to control the loading of the program into the destination network terminations; a non-volatile memory for storing the program which contains the instructions and data required by the processor; a volatile memory for storing processor data (for example, the program to be loaded into the destination network terminations); a set of interfaces for connection to the local exchange, these being telephone, data or ISDN interfaces depending on the type of service provided by the destination network termination; a serial interface for communication with the operation and maintenance centre; and a set of transceivers with their corresponding antennas for connection to the destination network terminations via the air interface.
   The local exchange shall include the appropriate interfaces for the service provided to the user of the destination network termination, these interfaces being telephone, data or ISDN interfaces.
- Network terminations (WT) of the wireless access system, or destination terminations, which connect the user terminals (not shown) with the local exchange through the air interface that links them to the fixed infrastructure (Fl) of the wireless access system. These elements incorporate a processor which serves to control the operation of the network termination; a non-volatile memory of sufficient size to store various different versions of the network termination control program; one or more transceivers with their corresponding antennas for connection to the fixed infrastructure through the air interface; and one or more interfaces with the user terminals. The characteristics of said user interfaces depend on the service provided and on the type of terminal (telephone, data, ISDN, etc.).

With this arrangement of system elements, the method of connectionless downloading of a software program in a number of terminations, object of the invention, is carried out in the following manner:

All network terminations (WT) of the same hardware type and which have the same version of the program running, have a group identity allocated to them that distinguish them from other network terminations of a different hardware type or running a different program version.

The operation and maintenance centre (OMC) contains a database in which the group identities are associated with the individual identities of the network terminations (WT).

Likewise, the group constituted by these network terminations (WT), which shall be termed a closed group of network terminations, has also allocated to it a common password for authentication and encryption, which shall be employed subsequently for deciphering encrypted calls.

Both the group identity and the group password are known to the fixed infrastructure (Fl) of the wireless access system.

The success threshold is a parameter introduced by the OA&M operator, and is used to halt the connectionless software downloading process once it has been reached. Said threshold is a reference level based on the recorded percentage of network terminations with the new program correctly received.

Thus, the operation and maintenance centre (OMC) receives from the OA&M operator the order to proceed with the loading of a new version of the software into a group of terminations. The OA&M operator provides the operation and maintenance centre (OMC) with the following data:
- the new version of software to be downloaded;
- the sum of all the octets in said version, termed "checksum";
- the group identity prior to downloading of the software;
- the group identity after downloading of the software;
- the transmission mode (with or without encryption); and
- the value of the success threshold.

The operation and maintenance centre (OMC) provides the fixed infrastructure (Fl) of the wireless access system through the OA&M interface with all the previously mentioned parameters except the threshold value.

The fixed infrastructure (Fl) carries out at this moment the processing of the software version in its processor. Said processing operation, based on known methods, comprises a fragmentation of the software version into smaller fragments suitable for the air interface, to which a sequence number and a redundancy by means of an error correction code are added. The sequence number is used to have the fragments numbered and to permit sorting in the network terminations (WT).

The error correction code is intended to reduce the probability that the received fragments have to be retransmitted, by permitting a finite number of errors.

Because the inclusion of the sequence number and the redundancy field reduce the transmission rate of the data pertaining to the software version, each of the fragments, excluding the sequence number and redundancy field, is compressed into a lower number of bits.

The error correction code is applied to the sequence number and to the compressed data fragment.

Once the fixed infrastructure (Fl) has processed all the fragments in the software program, it stores in its memory the characteristics of the software version to be transmitted, that is:
- the identity of the new software version;
- the sum of all the octets in the new version, termed "checksum" ;
- the group identity prior to the downloading of software:
- the group identity after the downloading of software;
- the number of fragments that constitute the software downloading procedure (and which has to be equal to that of the final fragment); and
- the random encryption number (only if the transmission is encrypted).

These parameters constitute the transaction information on the software downloading operation.

The fixed infrastructure (FI) transmits over a broadcast channel to which all the network terminations belonging to a given cell are connected, an initiating message for connectionless software downloading using the group identity. Previously the fixed infrastructure (Fl) shall have selected a different channel for carrying out the software downloading process: the identity of this channel shall also be transmitted over the broadcast channel.

This group call shall be repeated up to n times in order to permit all or as great a number as possible of the destination terminations to receive said call error-free and connect their receivers to the connectionless channel, n being a configurable number that shall depend on the characteristics of the cell in which it is transmitted.

In addition, the fixed infrastructure (Fl) shall start to transmit the transaction information over the connectionless channel selected. In like manner to the group call, this transaction information shall be repeated a number of times *m* in order to guarantee that said transaction information is received by all destination terminations which receive the group call at different moments of time, *m* being a configurable number depending on the characteristics of the cell in which it is transmitted.

Once it is considered that there is a significant number of network terminations (WT) connected to the connectionless channel, then transfer of the fragments starts from the fixed infrastructure (Fl) to the network terminations (WT).

On the other hand, the fixed infrastructure (Fl) shall cease to transmit the group call over the broadcast channel in a repetitive manner, proceeding to do this periodically at a configurable interval of time, while the connectionless software downloading procedure lasts. The purpose of this periodic group call is to permit the network terminations (WT) which may not have received the initial group call to be able to connect to the connectionless channel at any moment. The periodic group call differs from the initial group call in that in the former are transmitted not only the group identity and the connectionless channel identification, but also all the transaction information.

In addition, and for the case in which the transmission is encrypted, the encryption key, together with the group key, should also be included in the random number generated.

Before the transfer of fragments over the connectionless channel takes place, the fixed infrastructure (Fl) establishes the encryption mode at the air interface in accordance with the transmission mode received from the operation and maintenance centre (OMC).

When the transmission mode is without encryption, then the transfer of fragments takes place after the final transmission of transaction information.

If the transmission mode is encrypted, then the fixed infrastructure (Fl) sends to the terminations a random number, which, together with the group key and the group identity before downloading, and by applying an algorithm known to the fixed infrastructure (Fl) and the network terminations (WT), produces as result the encryption key to be applied to the transmission (encryption key for the session).

The fixed infrastructure (Fl) applies an algorithm different to the previous one in which intervenes the encryption key of the session and the complete fragment to be sent (including the sequence number and the redundancy field). For their part, the network terminations (WT) apply the algorithm in reverse to the received packet, thereby obtaining the complete original fragment before encryption.

The following phase after establishing the transmission mode is, as has already been mentioned, the fragment transfer phase over the connectionless channel.

The fixed infrastructure (Fl) starts to transmit in sequence all the fragments which it has stored, and which have been the result of the processing operation on the software version received from the operation and maintenance centre (OMC).

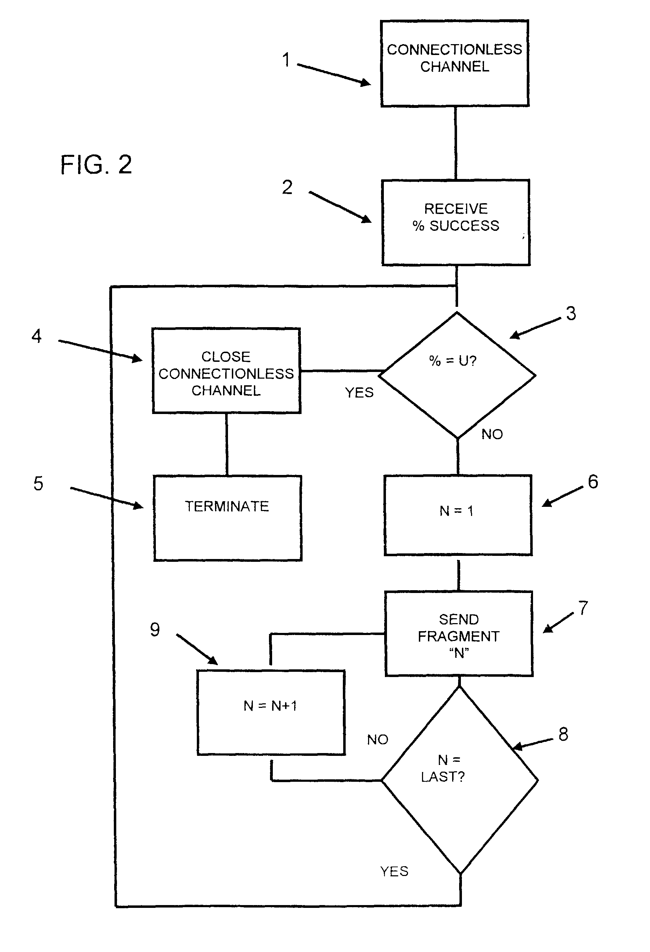

The diagram of figure 2 assists in providing a better understanding of the main steps in the downloading procedure carried out from the fixed infrastructure, just as has been explained above.

In said figure it can be seen that in step (1). the fixed infrastructure (Fl) establishes a connectionless channel in order to transmit over it the transaction information. In step (2), the fixed infrastructure (Fl) receives information concerning the network terminations (WT) which have received all the information successfully. If the percentage of error-free receptions is equal to or greater than the success threshold value (U), step (3), the fixed infrastructure (FI) will close the connectionless channel and will conclude the transmission as can be seen in steps (4) and (5), respectively.

On the other hand, if the percentage of error-free receptions has not reached a value equal to the threshold value (U), then the fixed infrastructure (Fl) starts to send the fragments of the software version starting with the first fragment, steps (6) and (7), and checks if the fragment sent is the last in the transmission sequence, step (8). If the result of checking in step (8) is not affirmative, the following fragment is sent as can be appreciated from steps (8) and (9) and then step (7) in figure 2.

On the other hand, if the result of checking in step (8) is positive, the process returns to step (3) of the diagram shown in figure 2, that is, to check whether the percentage of the error-free receptions in the terminations (WT) is equal to or greater than the aforementioned success threshold value, and from this step the procedure is repeated in the manner described.

For their part, the network terminations (WT) on receiving a fragment first check to see if reception is correct by applying the error correction code. Those fragments detected with errors shall be discarded, regardless of the content of either the field with the sequence number or the fragment itself.

For those fragments marked as correctly received, the network terminations (WT) shall check the sequence number. If a fragment with said sequence number has already been stored, then the fragment that was received latest will be discarded.

The valid fragments shall be decompressed and stored in the non-volatile memory in the network termination (WT).

When a network termination (WT) has correctly stored all the fragments that constitute the software version (according to the transaction information), then it will verify that the checksum made on the stored fragments coincides with the checksum that the fixed infrastructure (Fl) sent in the transaction information. If said checksum is correct, the network termination (WT) shall set up an OA&M call with the fixed infrastructure (Fl), reporting the software downloading procedure successful, and proceeding to disconnect its receiver from the connectionless channel.

The network terminations (WT) that reach the end of transmission of all the fragments that constitute the transaction with some fragments with errors, shall remain connected to the connectionless channel waiting until they are received correctly. For this reason, the fixed infrastructure (Fl) performs a sequential transmission of the fragments, that is, after sending the final fragment it resends the first in the transaction.

This sequential transmission process is repeated until the operation and maintenance centre (OMC) decides to halt the connectionless software downloading procedure. The success threshold intervenes in deciding when the procedure is to be halted.

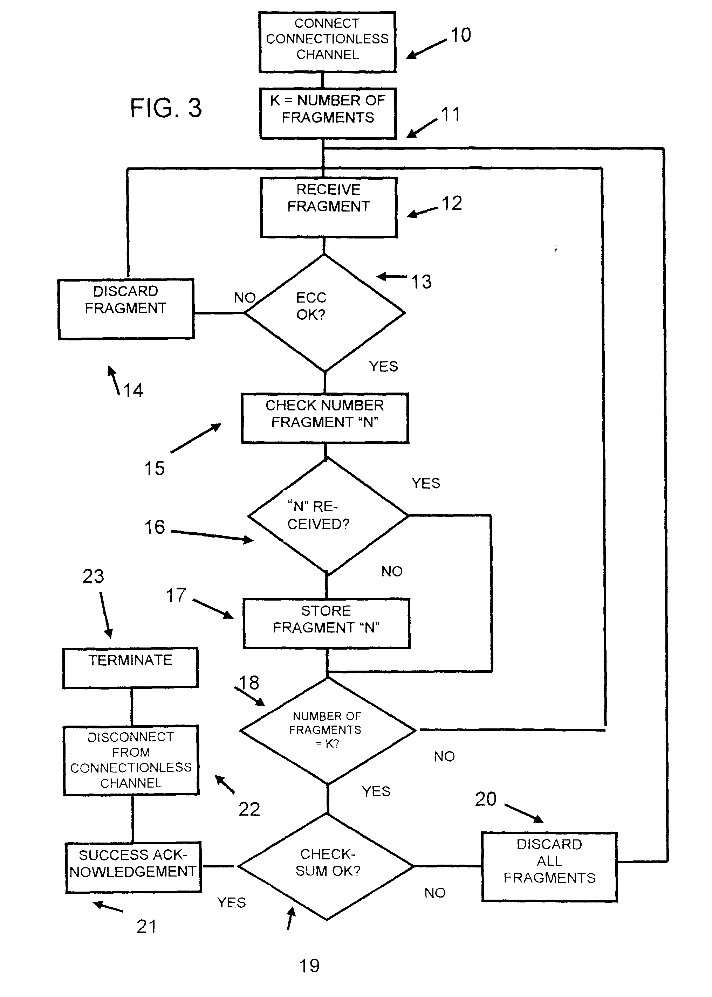

The diagram of figure 3 assists in providing a better understanding of the main steps in the downloading procedure performed in each network termination, just as has been explained above.

In said figure it can be seen that the network termination is first connected with the connectionless channel indicated by the fixed infrastructure and receives the full number (K) of the fragments to be sent, steps (10) and (11), respectively.

On initiating reception of the fragments sent by the fixed infrastructure, in the manner described in the steps (3) to (9) of figure 2, the network termination (WT) receives the fragments in accordance with step (12) and verifies error presence by means of the error correction code (ECC) in step (13). In the event that errors are present, the received fragment shall be discarded as is shown in step (14) and the process returns to step (12) in order to receive other fragments.

If, in step (13), it is found that there are no errors in reception. the network termination checks in step (15) the number of the fragment "N" received, and, afterwards, in step (16), verifies whether the received fragment has already been received. In the event that the result of the verification process is negative, that is fragment "N" has not been received in earlier transmission sequences, said fragment will be stored as indicated in step (17), proceeding subsequently to step (18).

If, on the contrary, the result of step (16) is affirmative, that is the fragment "N" has already been received and stored, the checking process of step (18) is carried out immediately.

In step (18) it is verified whether the total number (K) of the fragments have been received. If the response is negative, the process returns to step (12) in order to receive a new sequence of fragments as has been described for steps (12) to (18).

In the event that it is verified that the total number (K) of the fragments has been received, a subsequent verification is done in step (19) in order to check if the sum of all the octets (checksum) of the software version has been received.

If the result of this verification is negative, all the received fragments are discarded, step (20), in order to re-initiate a new reception sequence.

If the result of the verification process of step (19) is affirmative, that is all the fragments have been received, the network termination (WT) sends an acknowledgement of successful reception (21), it is disconnected from the connectionless channel (22) and terminates (23) the reception session of updated software.

The operation and maintenance centre (OMC) receives from the fixed infrastructure (Fl) the information concerning the network terminations (WT) that have received the software version successfully, from the received OA&M calls. When the percentage of network terminations (WT) which have received the program successfully is equal to or surpasses the success threshold, the cyclic transmission of fragments is finalised, proceeding thereafter to release the connectionless channel.

Those network terminations (WT) which do not report success, and which must constitute a marginal group with respect to the total, shall be able to receive the fragments that are missing by means of other connection-oriented procedures (point to point) in a conventional manner.

The operation and maintenance centre (OMC) can employ a similar procedure to that described (connectionless) in order to address the terminations that have received the new software version successfully with the purpose of starting to run said software version, receiving acknowledgements from the network terminations (WT) in corresponding OA&M calls.

With respect to the group identities, the updating is done by making use of the old group identity, whereas once the network termination (WT) confirms execution of the new software version, the former shall be replaced by the new group identity.

It is to be pointed out that in any of the steps in the software downloading process, said procedure shall not be halted in the event of a call being initiated in a network termination (WT), it being possible consequently to perform the software downloading procedure simultaneously with the user calls.

## Claims

1. Method of connectionless downloading of a software program in a number of terminations of a communications network (TN) by means of broadcasting said software program in fragments from a fixed infrastructure (Fl), characterised by comprising the steps of:
- grouping in a respective set the network terminations (WT) which incorporate identical or compatible versions of the software program, and allocating a group identity to said set;
- indicating a downloading channel in order to carry out the downloading of the software program into said set;
- transmitting, in repeatable sequences, the fragments of said software program over said downloading channel;
- receiving, in said network terminations (WT), said repeatable sequences of the fragments of the software program, and checking for their error-free reception; and
- storing the fragments received error-free in each network termination (WT) until all fragments that constitute said software program are stored.

2. Method, according to claim 1, characterised in that the network terminations (WT) are wireless terminations.

3. Method, according to claim 1, characterised in that the data to be transmitted to the network terminations (WT) in the form of fragments include: the new version of software to be downloaded in octets; a sum of all the octets of said version; the group identity before downloading the software; a group identity after downloading the software; and a transmission mode indication, with or without encryption.

4. Method, according to any of the preceding claims, characterised in that the indication of the downloading channel is done by the fixed infrastructure (Fl).

5. Method, according to any of the preceding claims, characterised in that once all the fragments of the software program are stored in a network termination (WT), the latter sets up an acknowledgement call to the fixed infrastructure (Fl), reporting success in the downloading procedure.

6. Method, according to claim 1, characterised in that in the event that a network termination (WT) receives one or more fragments with errors, it remains connected to the downloading channel waiting to receive the ensuing sequences until said fragments are received correctly.

7. Method, according to any of the preceding claims, characterised in that the transmission in sequence is repeated until an operation and maintenance centre (OMC) decides to halt the connectionless software downloading procedure.

8. Method, according to claim 7, characterised in that the halting of the downloading process is decided when a value relative to the number of the network terminations (WT) that have achieved error-free reception is equal to or greater than a pre-determined success threshold value (U).

9. Method, according to any of the preceding claims, characterised in that a sequence number is added to the fragments of the software program in order to permit their numbering and sorting in the network terminations (WT), and a redundancy factor by means of an error correction code.

10. Method, according to any of the preceding claims, characterised in that the transmission mode of the fragments is encrypted.

11. Method, according to claim 10, characterised in that the fixed infrastructure (Fl) sends to the network terminations (WT) a random number which, together with a group key and the group identity before downloading, gives as a result an encryption key which is applied in the transmission.

12. Method, according to any of the preceding claims, characterised in that the interface used as the transmission medium is the air.

13. System for carrying out the method of claim 1, characterised in that it comprises a fixed infrastructure (Fl) which provides connection between a number of wireless network terminations (WT) and a local exchange through the interfaces required by the local exchange, as well as with an operation and maintenance centre (OMC); an operation and maintenance centre (OMC) connected to the fixed infrastructure (Fl) and serving for the management of software versions; and a number of wireless network terminations (WT) which provide connection between user terminals and the local exchange and the operation and maintenance centre (OMC) over the air interface that links them to the fixed infrastructure (Fl) of the system.
